# EUROPÄISCHE PATENTSCHRIFT

(11) **EP 3 464 013 B1**
(45) Veröffentlichungstag und Bekanntmachung des Hinweises auf die Patenterteilung: **17.06.2020**
(21) Anmeldenummer: 17748412.8
(22) Anmeldetag: 18.07.2017
(51) Int. Cl.: B61D 17/00, F16B 5/02, F16B 1/00

(54) **VERBINDUNG ZWISCHEN BAUTEILEN MIT UNTERSCHIEDLICHEN WÄRMEAUSDEHNUNGSKOEFFIZIENTEN**
CONNECTION BETWEEN COMPONENTS WITH DIFFERENT COEFFICIENTS OF THERMAL EXPANSION
LIAISON ENTRE DES PIÈCES PRÉSENTANT DES COEFFICIENTS DE DILATATION THERMIQUE DIFFÉRENTS

(30) Priorität: 29.07.2016 DE 102016213989
(43) Veröffentlichungstag der Anmeldung: 10.04.2019
(73) Patentinhaber: Siemens Mobility GmbH, 81739 München (DE)
(72) Erfinder: GEBHARD, Bruno, 91301 Forchheim (DE); RATTENSPERGER, Herbert, 2100 Korneuburg (AT)
(86) Internationale Anmeldenummer: PCT/EP2017/068080
(87) Internationale Veröffentlichungsnummer: WO 2018/019651

(56) Entgegenhaltungen:
- DE-A1- 10 107 551
- DE-A1-102014 224 606
- DE-C1- 19 851 227
- JP-A- H01 279 105

## Beschreibung

Die Erfindung betrifft eine Verbindung zwischen einem ersten Bauteil und einem daran befestigten zweiten Bauteil, wobei das erste und das zweite Bauteil einen unterschiedlichen Wärmeausdehnungskoeffizienten aufweisen. Insbesondere betrifft die Erfindung ein Schienenfahrzeug mit einer solchen Verbindung.

In Schienenfahrzeugen werden größere Bauteile, wie z. B. Wagenkästen/Container mit Traversen durch Schraubverbindungen verbunden, wobei der Wagenkasten bzw. der Container auf der einen Seite und die Traverse auf der anderen Seite aus unterschiedlichen Materialien bestehen. Dabei weisen die zu verbindenden Materialien einen unterschiedlichen Wärmeausdehnungskoeffizienten auf. Insbesondere bei diesen größeren Bauteilen kommt es bei Temperaturänderungen zu großen Schnittstellenkräften und infolge zum Rutschen einer Schraubverbindung.

Aus der DE 10 2014 224 606 A1 ist eine Verspannungsanordnung eines ersten Bauteils und eines zweiten Bauteils aneinander bekannt, wobei das erste Bauteil einen ersten Wärmeausdehnungskoeffizienten und das zweite Bauteil einen zweiten Wärmeausdehnungskoeffizienten aufweist, wobei der erste Wärmeausdehnungskoeffizient und der zweite Wärmeausdehnungskoeffizient zueinander verschieden sind.

Die Aufgabe besteht darin, eine Verbindung von Bauteilen mit unterschiedlichen Wärmeausdehnungskoeffizienten zu verbessern.

Erfindungsgemäß wird eine Verbindung zwischen zwei Bauteilen zur Verfügung gestellt, umfassend: ein erstes Bauteil aus einem ersten Material, eine Beilageplatte und ein zweites Bauteil, welches zwischen dem ersten Bauteil und der Beilageplatte angeordnet ist, wobei das zweite Material einen anderen Wärmeausdehnungskoeffizienten als das erste Material aufweist, bevorzugt einen höheren Wärmeausdehnungskoeffizienten. Ferner ist eine Passverbindung derart angeordnet, dass eine erste Befestigung vom ersten Bauteil, zweiten Bauteil und Beilageplatte an-, mit- bzw. zueinander gewährleistet ist. Eine Schraubverbindung ist zudem angeordnet, dass eine zweite Befestigung vom ersten Bauteil, zweiten Bauteil und Beilageplatte an-, mit- bzw. zueinander gewährleistet ist. Die Passverbindung ist relativ zu dem ersten Bauteil und zur Beilageplatte passgenau eingepasst und relativ zum zweiten Bauteil mit Spiel eingepasst. Die Schraubverbindung ist relativ zu dem ersten Bauteil, zum zweiten Bauteil und zur Beilageplatte mit Spiel eingepasst.

Die Erfindung hat den Vorteil, dass eine zweischnittige Verbindung von Bauteilen mit unterschiedlichen Wärmeausdehnungskoeffizienten durch die Beilageplatte, welche auch als Lasche, Beilageblech oder als Beilagering bezeichnet werden kann, bereitgestellt wird.

Die Beilageplatte wird dabei durch die Passverbindung unbeweglich mit dem ersten Bauteil verbunden. Das zweite Bauteil ist aber gegenüber der Passverbindung aufgrund des Spiels beweglich und es kann eine abweichende Wärmeausdehnung des zweiten Bauteils gegenüber dem ersten Bauteil ausgeglichen werden.

Unter dem Begriff Wärmeausdehnungskoeffizient wird im Folgenden im Wesentlichen der Längenausdehnungskoeffizient verstanden.

Durch die zusätzlich mitverschraubte Beilageplatte, die zur Achse hin drehgesichert ist, kann sich das zweite Bauteil bei Temperaturausdehnung bewegen ohne dass die mit Spiel eingepasste Schraubverbindung rutscht bzw. beansprucht wird.

Dabei kann einerseits über Reibung zwischen Beilageplatte und zweitem Bauteil die doppelte Scherkraft übertragen werden. Andererseits bewirkt bei Überschreiten der Reibgrenze ein Rutschen keine Beanspruchung einer Schaftschraube in der Schraubverbindung auf Biegung. Auch ein Schraubenkopf rutscht nicht und die Schraube löst sich nicht.

Die Beilageplatte wird dabei bevorzugt biegesteif über eine Passverbindung an das erste und zweite Bauteil angebunden.

Die Passverbindung umfasst bevorzugt eine Passschraube und eine erste Mutter. Sie kann aber auch als Passstift oder als Bolzenverbindung ausgebildet sein. Die Schraubverbindung umfasst bevorzugt eine Schaftschraube und eine zweite Mutter. Sie kann auch als Schließringbolzen ausgebildet sein.

Das erste Bauteil ist bevorzugt ein Wagenkasten oder ein Container und das zweite Bauteil eine an dem Wagenkasten befestigte Traverse. Insbesondere bei solch entsprechend dimensionierten Bauteilen entstünden im Stand der Technik Probleme einer Schraubverbindung aufgrund von unterschiedlichen Wärmeausdehnungskoeffizienten der zu verbindenden Materialien.

Das erste Material des ersten Bauteils umfasst gemäß eines Ausführungsbeispiels Stahl, bevorzugt Edelstahl. Das zweite Material des zweiten Bauteils umfasst bevorzugt Aluminium oder eine Aluminiumlegierung. In diesem Ausführungsbeispiel hat Stahl einen niedrigeren Wärmeausdehnungskoeffizienten als Aluminium.

Die Anbindungen sowohl vom ersten Bauteil und zweiten Bauteil als auch vom zweiten Bauteil und Beilageplatte sind jeweils formschlüssig. Mit anderen Worten sind erstes Bauteil, zweites Bauteil und Beilageplatte parallel zueinander und gestapelt aufeinander angeordnet.

Die Passschraube weist bevorzugt eine Vorspannkraft von 50 % oder weniger ihrer Streckgrenze auf. Die Passschraube kann demnach in Abhängigkeit von einem Reibwert in den Trennflächen der Verbindung nicht stark vorgespannt ausgebildet sein.

Die Schraubverbindung weist bevorzugt einen kleineren Durchmesser als die Passverbindung auf, weil erfindungsgemäß die Scher- und Biegekräfte von der Passverbindung aufgenommen werden.

Die Schraubverbindung ist bevorzugt zwischen 50 % und 80 % ihrer Streckgrenze vorgespannt, noch bevorzugter zwischen 65% und 75 %.

Bevorzugt verhindert ein niedriger Reibbeiwert in der Trennfuge die Beanspruchung der Passverbindung.

Die Toleranz der Bohrung ist H11, die Toleranz der Passung der Passschraube ist h6.

Die Schraubverbindung und das erste Bauteil, die Schraubverbindung und das zweite Bauteil, und die Schraubverbindung und die Beilageplatte weisen in einem Ausführungsbeispiel dasselbe Spiel relativ zueinander auf.

Das Spiel zwischen der Schraubverbindung und einem Element aus der Gruppe gebildet aus dem ersten Bauteil, dem zweiten Bauteil und der Beilageplatte beträgt kleiner 1mm.

Noch bevorzugter weist jedoch die Schraubverbindung zu dem Bauteil mit dem höheren Wärmeausdehnungskoeffizienten ein größeres Spiel als zu dem anderen Bauteil und zu der Beilageplatte auf. Dies ermöglicht es, Wärmeausdehnungen noch besser aufnehmen zu können.

Die Beilageplatte besteht bevorzugt aus einem dritten, von dem ersten und dem zweiten Material unterschiedlichen Material.

In einem Ausführungsbeispiel ist eine zweite Beilageplatte zwischen dem Kopf der Passschraube und dem ersten Bauteil angeordnet. Dies ermöglicht es, weitere Reibflächen zur Verfügung zu stellen.

In einem weiteren Ausführungsbeispiel ist ein Schienenfahrzeug mit einer erfindungsgemäßen Verbindung vorgeschlagen, wobei das erste Bauteil ein Wagenkasten oder ein Container des Schienenfahrzeugs ist und das zweite Bauteil eine Traverse.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine Verbindung zwischen zwei Bauteilen des Standes der Technik vor einer Wärmeausdehnung,
- Figur 2: eine Verbindung zwischen zwei Bauteilen des Standes der Technik nach einer Wärmeausdehnung,
- Figur 3: eine erfindungsgemäße Verbindung zwischen zwei Bauteilen in einem ersten Ausführungsbeispiel bei Montage,
- Figur 4: eine erfindungsgemäße Verbindung zwischen zwei Bauteilen in einem ersten Ausführungsbeispiel nach einer Wärmeausdehnung,
- Figur 5: eine erfindungsgemäße Verbindung zwischen zwei Bauteilen in einem ersten Ausführungsbeispiel,
- Figur 6: eine Detailansicht einer Passverbindung der Figur 3,
- Figur 7: eine Draufsicht in Richtung des Pfeils V in Figur 4,
- Figur 8-33: verschiedene Ausgestaltungen einer erfindungsgemäßen Verbindung zwischen zwei Bauteilen.

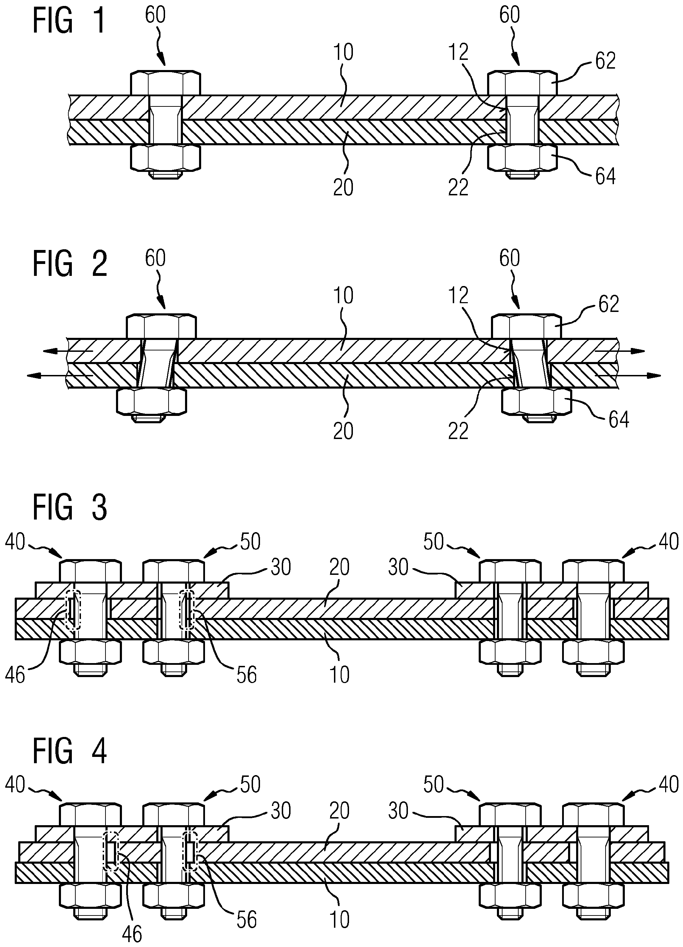

In der Figur 1 und der Figur 2 ist eine Verbindung 60 zwischen zwei Bauteilen 10, 20 des Standes der Technik gezeigt, einmal vor einer Wärmeausdehnung (Figur 1), einmal nach einer Wärmeausdehnung (Figur 2). Die Verbindung 60 besteht rein beispielhaft aus einer Schraube 62 und einer Mutter 64 und verbindet ein erstes Bauteil 10 mit einem zweiten Bauteil 20. Die Schraubverbindung kann auch als Bolzenverbindung ausgebildet sein. Zur Befestigung des zweiten Bauteils 20 an dem ersten Bauteil 10 durchdringt die Schraube 62 die Querschnitte vom ersten Bauteil 10 und zweiten Bauteil 20. Dazu weisen erstes und zweites Bauteil 10, 20 Löcher 12, 22 auf. Das erste und das zweite Bauteil 10, 20 bestehen aus unterschiedlichen Materialien, die einen unterschiedlichen Wärmeausdehnungskoeffizienten aufweisen. Auf einer Seite des ersten Bauteils 10 liegt ein Kopf der Verbindung 60 an. Auf der vom ersten Bauteil 10 abgewandten Seite des zweiten Bauteils 20 ist die Schraube 62 mit einer Mutter 64 verschraubt. Infolge der unterschiedlichen Wärmeausdehnungskoeffizienten der beiden Bauteile, welche durch die unterschiedlich langen Pfeile in der Figur 2 angedeutet sind, verschieben sich bei Wärme die Schraublöcher 12 bzw. 22 zueinander und es kommt zu einer Scherung der Schraube 62 bis zu einem Abriss bzw. zu einer Relativbewegung des Schraubenkopfs, welche zur Reduktion der Vorspannkraft und schließlich zum Lockern der Schraube führt. Infolgedessen ist keine Verbindung zwischen dem ersten und dem zweiten Bauteil 10, 20 mehr vorhanden.

Die Verbindung 60 ist hier beispielhaft passgenau ausgebildet, d. h. zwischen Schraube 62 und den Trennflächen zum ersten Bauteil 10 bzw. zum zweiten Bauteil 20 besteht kein Spiel. Allerdings kann auch ein Spiel vorhanden sein. Solange dieses kleiner ist als die auftretende Scherung, kommt es weiterhin zu einer Beanspruchung der Schraube 62. Zu beachten ist aber, dass ein vorhandenes Spiel zu einer schlechteren Verbindung von ersten und zweiten Bauteil führt und somit ein Rutschen der Bauteile zueinander auftreten kann, welches nicht erwünscht ist.

Im Stand der Technik der Figuren 1 und 2 werden Bauteile im Schienenfahrzeugbau gleitfest verschraubt. Bei Materialpaarungen mit unterschiedlichen Wärmeausdehnungen kommt es bei einer Temperaturänderung zu unterschiedlichen Längenänderungen. Durch hohe Zwängungskräfte kommt es zum Überschreiten der Haftgrenze. Ein daraus resultierendes Gleiten bei zyklischer Beanspruchung führt dann letztendlich zum Lösen der Schraubverbindung. Zunächst führt eine Querkraft über der Haftgrenze zum Gleiten in der Trennfuge. Das Gleiten führt zu einer Biegung der Schraube bzw. zum Gleiten unter dem Kopf und dann bei häufiger Richtungsänderung zum Lösen der Schraube.

Figur 3 zeigt den erfindungsgemäßen Aufbau im Zustand der Montage. Figur 4 zeigt den erfindungsgemäßen Aufbau nach einer Wärmeausdehnung. Erfindungsgemäß wird die Biegeplatte oder Klemmplatte 30 durch eine Passverbindung 40 in Form einer Passschraube, eines Passbolzens oder eines Passstiftes 42 an eine Grundplatte als Teil eines Wagenkastens oder Containers 10 gekoppelt. Dabei kann die sich die dazwischenliegende Platte, die Traverse 20 nach Überschreiten der Haftgrenze zwischen der Grundplatte 10 und der Biegeplatte 30 bewegen. Der Passbolzen 42 wird dabei auf Biegung beansprucht und hält die Biegeplatte 30 mit der Grundplatte 10 in Position. Die Schraube 52 der Schraubverbindung 50 überträgt dabei keine Biegung und es kommt nicht zum Gleiten unter dem Schraubenkopf, d.h. es kommt nicht zum Lösen der Schraubverbindung 50. War in Figur 3 im Zustand der Montage bei der Passschraube 42 noch ein symmetrisches Spiel 46 vorhanden, ist dieses Spiel 46 in Figur 4 nach Wärmeausdehnung asymmetrisch ausgebildet. Entsprechend hat sich das Spiel 56 an der Schraubverbindung 50 geändert.

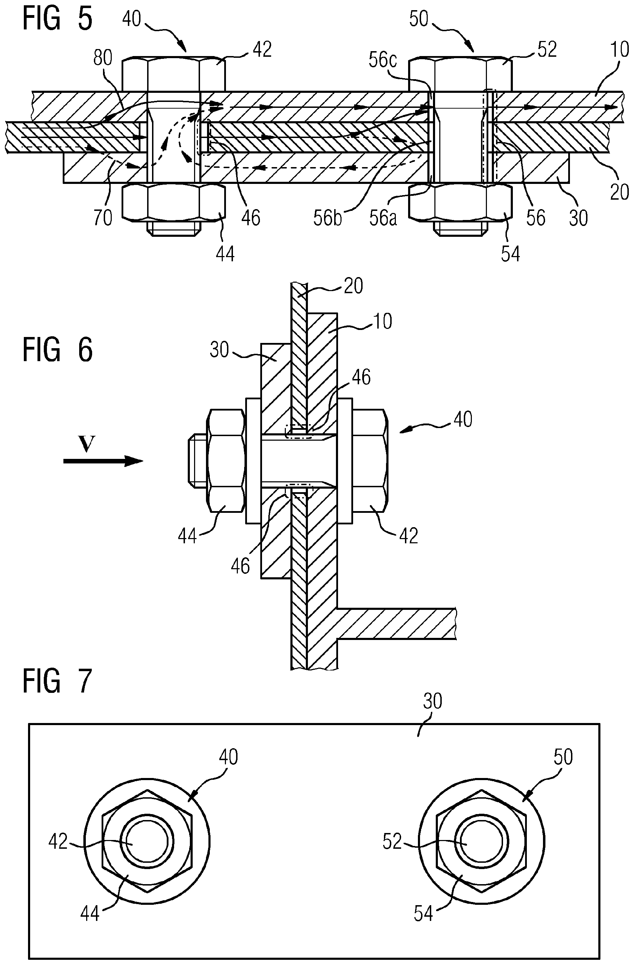

Figur 5 zeigt eine erfindungsgemäße Ausgestaltung einer Verbindung zwischen zwei Bauteilen mit unterschiedlichen Wärmeausdehnungskoeffizienten im Detail.

Im Rahmen der Erfindung kann rein beispielhaft das erste Bauteil als ein Wagenkasten oder ein Container eines Schienenfahrzeugs ausgebildet sein und das zweite Bauteil als eine an dem Wagenkasten bzw. dem Container befestigte Traverse, Träger, Querbalken oder allgemein ein Halterungselement.

Erfindungsgemäß umfasst die Verbindung zwischen zwei Bauteilen somit ein erstes Bauteil 10 aus einem ersten Material, eine Beilageplatte 30 und ein zwischen erstem Bauteil 10 und Beilageplatte 30 angeordnetes zweites Bauteil 20 aus einem zweiten Material, welches einen unterschiedlichen Wärmeausdehnungskoeffizienten gegenüber dem ersten Material aufweist. Eine Passverbindung 40 ist derart angeordnet, dass eine erste Befestigung vom ersten Bauteil 10, zweiten Bauteil 20 und Beilageplatte 30 aneinander, miteinander bzw. zueinander gewährleistet wird. Eine Schraubverbindung 50 ist zudem beabstandet von der Passverbindung derart angeordnet, dass eine zweite Befestigung vom ersten Bauteil 10, zweiten Bauteil 20 und Beilageplatte 30 aneinander, miteinander bzw. zueinander gewährleistet ist. Die Passverbindung 40 ist relativ zu dem ersten Bauteil 10 und zur Beilageplatte 30 passgenau und relativ zum zweiten Bauteil 20 mit einem Spiel 46 eingepasst. Die Schraubverbindung 50 ist relativ zu dem ersten Bauteil 10, zum zweiten Bauteil 20 und zur Beilageplatte 30 mit einem Spiel 56 eingepasst. Zwischen Beilageplatte 30 und Schraubverbindung 50 ist ein Spiel 56a vorgesehen. Zwischen zweitem Bauteil 20 und Schraubverbindung 50 ist ein Spiel 56b vorgesehen. Zwischen erstem Bauteil 10 und Schraubverbindung 50 ist ein Spiel 56c vorgesehen. Die Spiele 56a, 56b und 56c können gleich dimensioniert sein. Es kann aber auch das Spiel 56 des Bauteils mit einem höheren Wärmeausdehnungskoeffizienten gegenüber dem Spiel des anderen Bauteils größer ausgebildet werden, damit eine unterschiedliche Wärmeausdehnung noch besser aufgenommen werden kann.

Die Passverbindung 40 kann eine Passschraube 42 und eine Mutter 44 umfassen, kann aber auch als Passstift oder als Bolzenverbindung ausgebildet sein. Die Schraubverbindung 50 kann eine Schaftschraube 52 und eine Mutter 54 umfassen, kann aber auch als Schließringbolzen ausgebildet sein.

Das Spiel 46 zwischen Passverbindung 40 und zweitem Bauteil 20 ist dazu ausgebildet, eine Wärmeausdehnung des zweiten Bauteils relativ zu den anderen Teilen der Schraubverbindung zu ermöglichen. Hierbei hätte das erste Bauteil 10 eine niedrigere Wärmeausdehnung als das zweite Bauteil 20. Die passgenaue Verbindung zwischen Passverbindung 40 und Beilageplatte 30 bzw. erstem Bauteil 10 führt zu einer rutschfesten Verbindung zueinander. Durch das gleichzeitig bestehende Spiel 56 zwischen Schraubverbindung 50 und dem ersten Bauteil 10, dem zweiten Bauteil 20 und der Beilageplatte 30 kommt es selbst bei Wärmeausdehnung zu keiner Beanspruchung der Schraubverbindung 50.

Durch die mitverschraubte Beilageplatte 30, die zur Achse hin drehgesichert ist, kann sich das zweite Bauteil 20 bei Temperaturausdehnung bewegen, ohne dass die mit Spiel 56 eingepasste Schraubverbindung 50 rutscht bzw. beansprucht wird.

Dabei kann über eine Reibung zwischen Beilageplatte 30 und zweitem Bauteil 20 die doppelte Scherkraft übertragen werden. Auch bewirkt bei Überschreiten der Reibgrenze ein Rutschen keine Beanspruchung der Schraubverbindung 50 auf Biegung. Auch ein Schraubenkopf rutscht nicht und die Schraube 52 löst sich nicht.

Die Beilageplatte 30 wird dabei bevorzugt biegesteif über die Passverbindung 40 an das erste und zweite Bauteil 10, 20 angebunden.

Die Anbindungen sowohl vom erste Bauteil 10 und zweiten Bauteil 20 als auch vom zweiten Bauteil 20 und Beilageplatte 30 sind jeweils formschlüssig ausgebildet.

Die Passverbindung 40 weist bevorzugt eine Vorspannkraft von 50 % oder weniger ihrer Streckgrenze auf. Die Passverbindung 40 kann somit in Abhängigkeit von einem Reibwert in den Trennflächen der Verbindung nicht stark vorgespannt ausgebildet sein.

Der Schaft der Schraubverbindung 50 weist bevorzugt einen kleineren Durchmesser als die Passverbindung 40 auf. Die Schraubverbindung 50 ist bevorzugt zwischen 50 % und 80 % ihrer Streckgrenze vorgespannt, noch bevorzugter zwischen 65% und 75 %.

Bevorzugt verhindert ein niedriger Reibbeiwert in der Trennfuge die Beanspruchung der Passverbindung.

In Figur 5 sind auch die Kraftflüsse der erfindungsgemäßen zweischnittigen Anbindung der beiden Bauteile 10, 20 gezeigt. Bei einer stärkeren Wärmeausdehnung des zweiten Bauteils 20 gegenüber dem ersten Bauteil 10 kann durch die Beilageplatte 30 und die damit verbundene zusätzliche Reibfläche ein zusätzlicher Kraftfluss 70 von dem zweiten Bauteil 20 über die Passverbindung 40 in das erste Bauteil 10 übertragen werden. Die Pfeile 80 deuten dabei den Kraftfluss zwischen erstem und zweitem Bauteil 10, 20 an.

Figur 6 zeigt einen Querschnitt durch die Passverbindung 40 und Figur 7 eine Draufsicht in Richtung des Pfeils V wie in Figur 6 dargestellt. In Figur 6 ist das Spiel 46 der Passverbindung 40 zum zweiten Bauteil 20 gezeigt sowie die passgenaue Verbindung zum ersten Bauteil 10 und zur Beilageplatte 30. Figur 7 zeigt eine Draufsicht auf die Passverbindung 40 und die Schraubverbindung 50 und zeigt unter anderem den Abstand von Passverbindung 40 und Schraubverbindung 50 zueinander. Die Beilageplatte 30 erstreckt sich von der Passverbindung 40 zur Schraubverbindung 50.

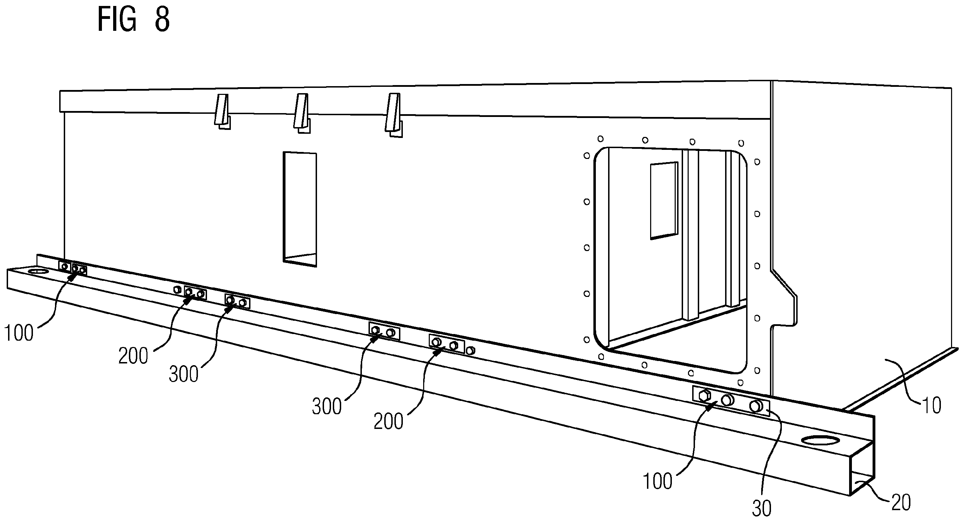

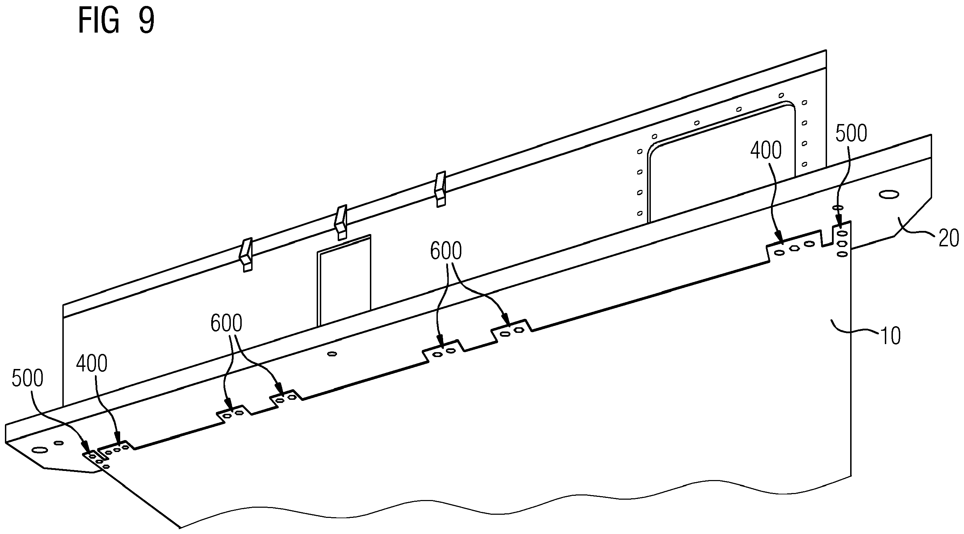

Figur 8 und Figur 9 zeigen unterschiedliche Typen von erfindungsgemäßen Verbindungen zwischen erstem und zweitem Bauteil 10, 20. Dabei ist das erste Bauteil 10 beispielhaft ein Container und das zweite Bauteil 20 eine Traverse.

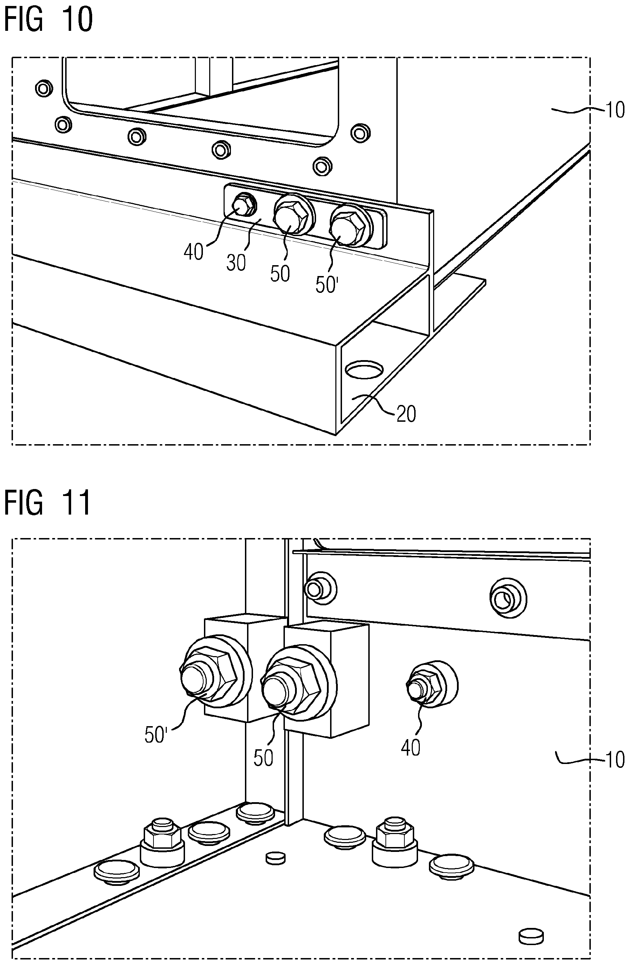

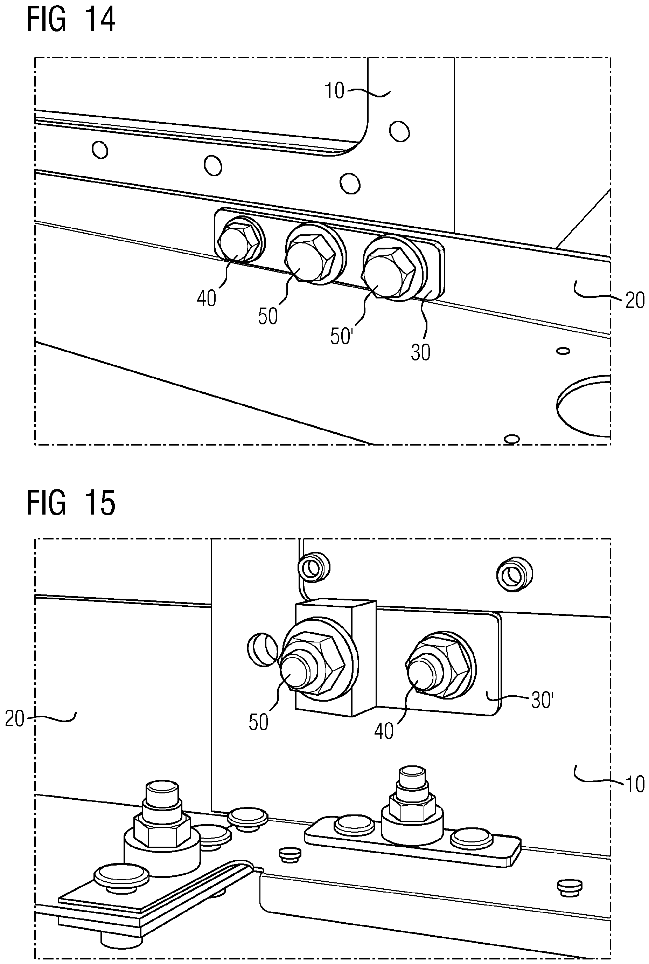

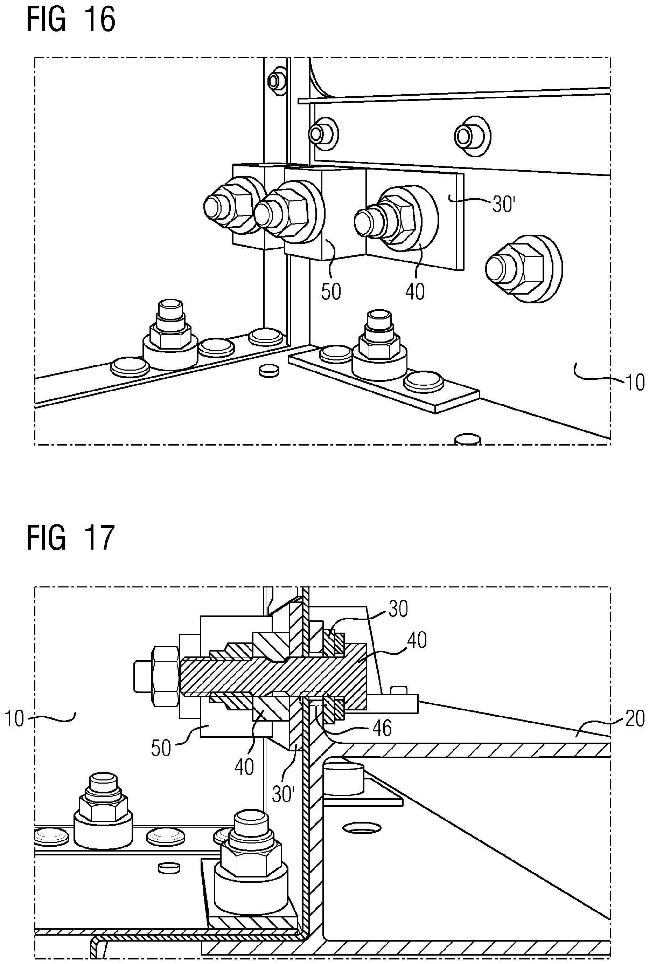

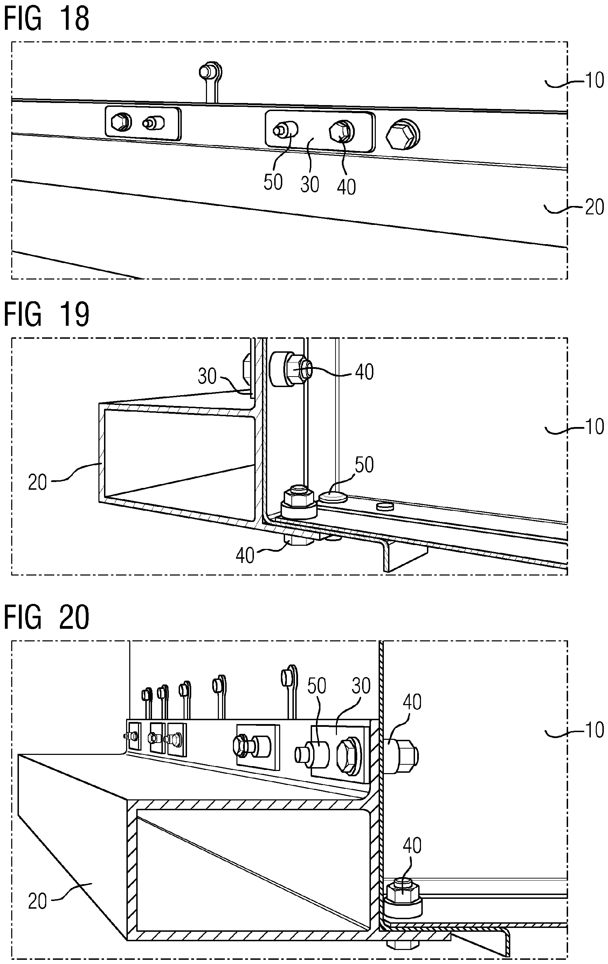

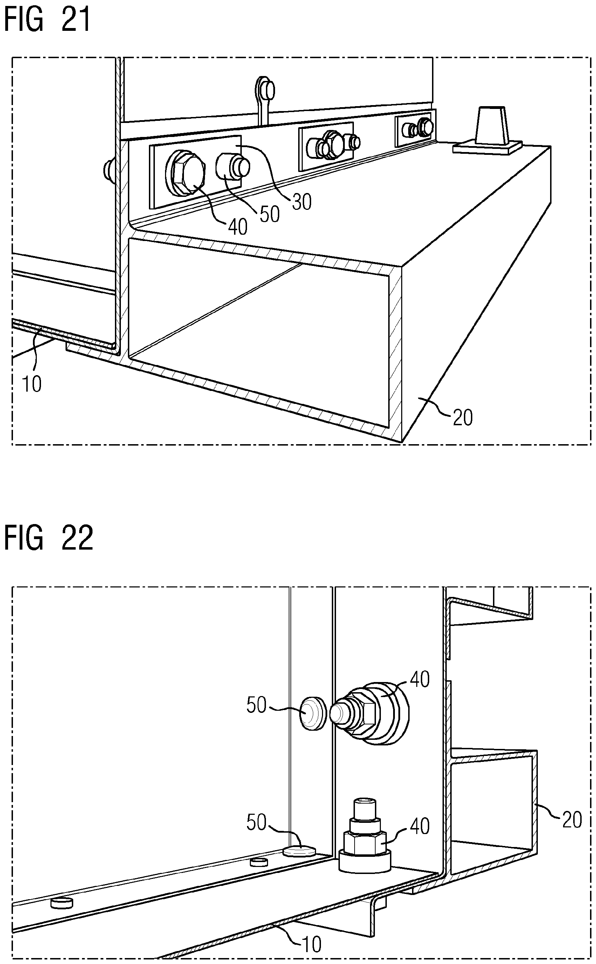

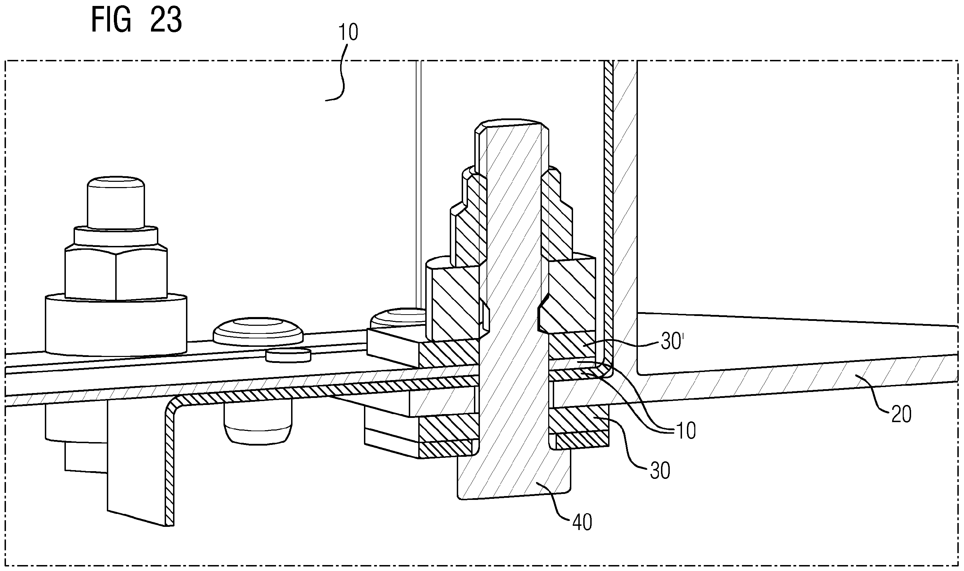

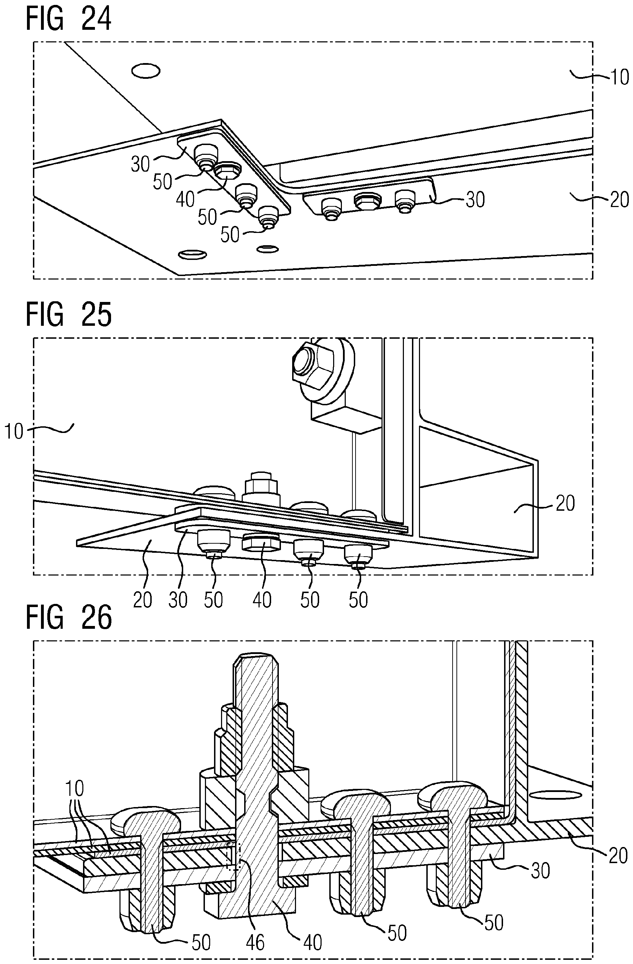

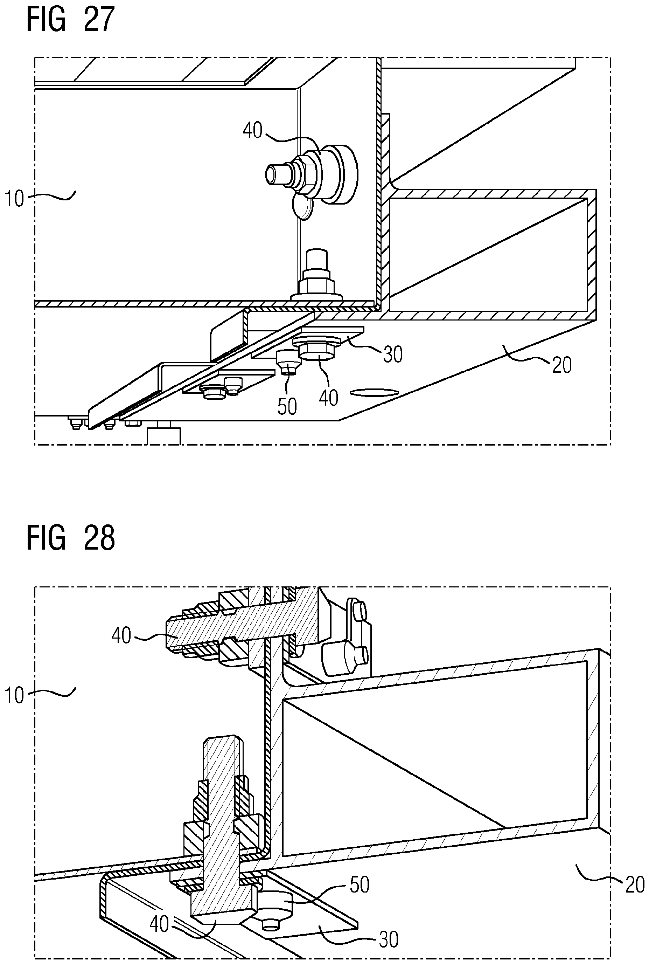

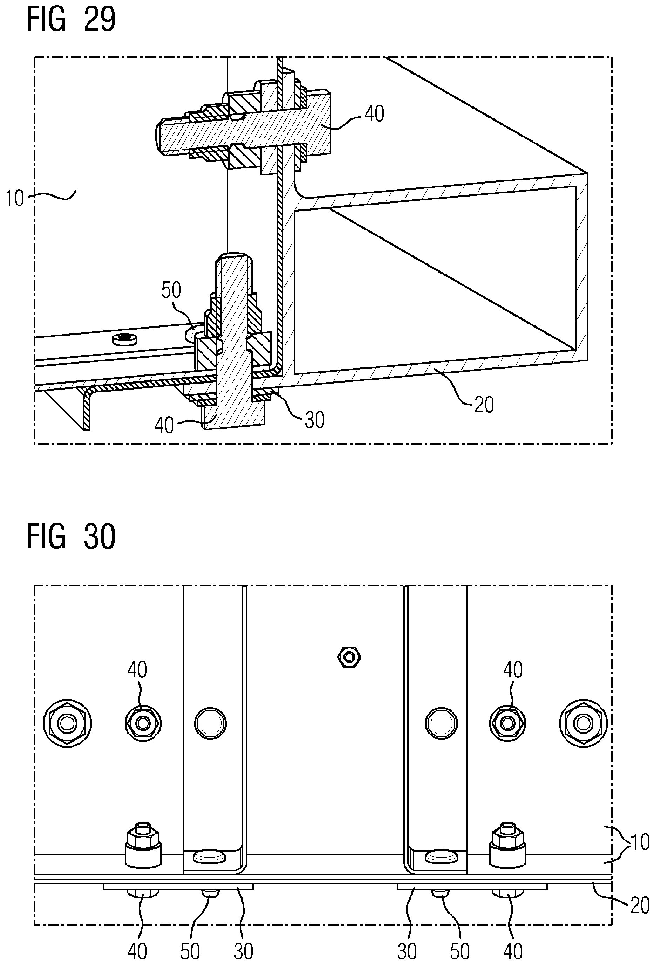

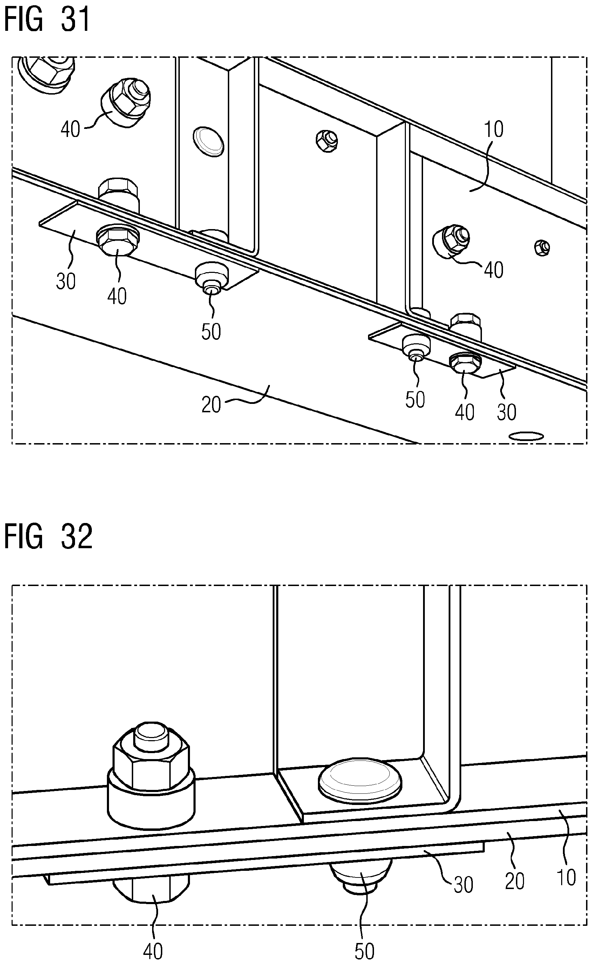

Die Figuren 10 bis 17 zeigen einen Typ 100 der Figur 8 eines zweiten Ausführungsbeispiels einer erfindungsgemäßen Verbindung in verschiedenen Ansichten. Figuren 18 bis 20 zeigen einen Typ 200 eines dritten Ausführungsbeispiels der erfindungsgemäßen Verbindung in verschiedenen perspektivischen Ansichten. Die Figuren 21 und 22 zeigen einen Typ 300 eines vierten Ausführungsbeispiels der erfindungsgemäßen Verbindung in verschiedenen perspektivischen Ansichten. Die Figur 23 zeigt einen Typ 400 eines fünften Ausführungsbeispiels der erfindungsgemäßen Verbindung in verschiedenen perspektivischen Ansichten. Die Figuren 24 bis 26 zeigen einen Typ 500 eines sechsten Ausführungsbeispiels der erfindungsgemäßen Verbindung in verschiedenen perspektivischen Ansichten. Schließlich zeigen die Figuren 27 bis 31 einen Typ 600 eines siebten Ausführungsbeispiels der erfindungsgemäßen Verbindung in verschiedenen perspektivischen Ansichten.

In dem zweiten Ausführungsbeispiel der Figuren 10 bis 17 ist ein Typ 100 der erfindungsgemäßen Verbindung dargestellt. Die Passverbindung 40 ist als Passstift oder Passbolzen ausgebildet, der einen Durchmesser von 16mm aufweisen kann. Es sind eine erste und zweite Schraubverbindung 50, 50' dargestellt, wobei nur eine der Schraubverbindungen 50, 50' das zweite Bauteil 20 an dem ersten Bauteil 10 befestigt und die andere Schraubverbindung 50, 50' verschiedene Teilbereiche des ersten Bauteils 10 aneinander befestigt. In dem gezeigten Ausführungsbeispiel ist sowohl außen als auch innen eine Beilageplatte 30, 30' angeordnet. Die Beilageplatten 30, 30' können rein beispielhaft aus Niro mit einer Stärke von 4 mm ausgebildet sein. Die zweite Beilageplatte 30' ist innen zwischen Passverbindung 40 und erstem Bauteil 10 angeordnet. Weitere Sicherungselemente wie Unterlegscheiben können vorgesehen sein. Wie in Figur 8 gezeigt, kann der Typ 100 der Verbindung bevorzugt im Randbereich vom ersten und zweiten Bauteil 10, 20 eingesetzt werden.

In dem dritten Ausführungsbeispiel der Figuren 18 bis 20 ist ein Typ 200 der erfindungsgemäßen Verbindung dargestellt. Wiederum ist die Passverbindung 40 als Passstift ausgebildet, der einen Durchmesser von 16mm aufweisen kann. Das Beilageblech 30 ist nur außen angeordnet und kann aus 2 mm Niro bestehen. Die in der Ansicht dargestellte dritte Schraubverbindung ist lediglich eine Erdungsschraube. Die Schraubverbindung 50 ist rein beispielhaft als Schließringbolzen ausgebildet. Der Typ 200 ist in Figur 8 weiter innen als der Typ 100 angeordnet.

In dem vierten Ausführungsbeispiel der Figuren 21-22 ist ein Typ 300 der erfindungsgemäßen Verbindung dargestellt. Der Typ 300 weist gegenüber dem Typ 200 keine Erdungsschraube auf, entspricht aber ansonsten weitestgehend dem Typ 200. Das Beilageblech 30 kann allerdings doppelt so dick, z. B. aus 4 mm Niro bestehen. Der Typ 300 ist gegenüber dem Typ 200 noch weiter innen, wie in der Figur 8 gezeigt, angeordnet.

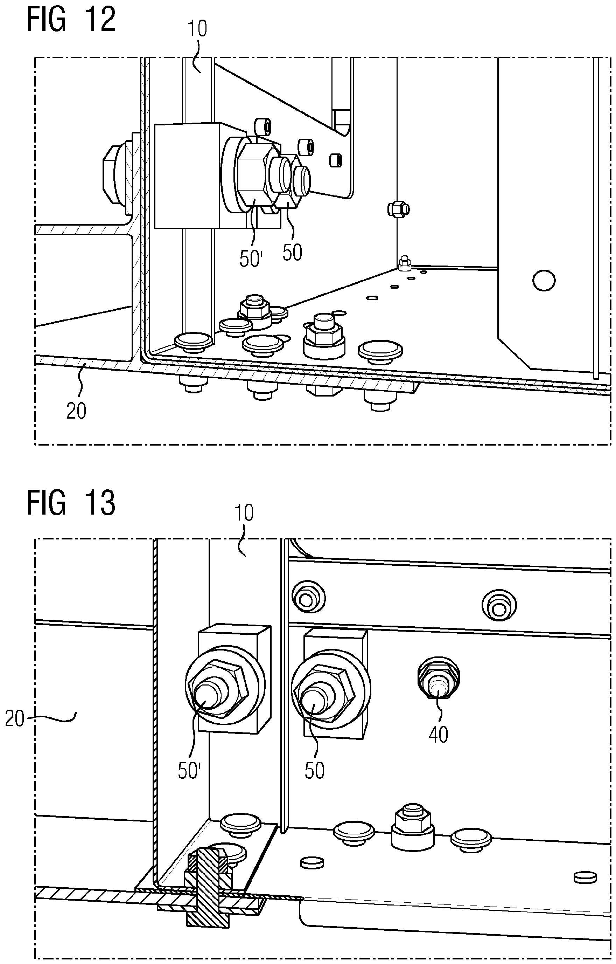

Figur 13 zeigt ein fünftes Ausführungsbeispiel, den Typ 400. Die Passverbindung 40 ist wiederum als Passstift ausgebildet. Ferner sind zwei Schließringbolzen als Schraubverbindung 50 vorgesehen. Es sind innen und außen Beilagebleche 30, 30' vorgesehen, die aus 4 mm Niro ausgebildet sein können. Dabei werden zwei Seitenwände des ersten Bauteils 10 befestigt. Nur eines der beiden Seitenwände kann eine Passung aufweisen, hier nur die vordere Seitenwand.

In dem sechsten Ausführungsbeispiel der Figuren 24-26 ist ein Typ 500 der erfindungsgemäßen Verbindung dargestellt. Der Typ 500 ist als Verbindung vom ersten und zweiten Bauteil 10, 20 von unten ausgebildet. Die Passverbindung 40 ist ein Passstift. Es sind zwei Schließringbolzen als Schraubverbindung 50 ausgebildet, mit der Passverbindung 40 in der Mitte. Außen befindet sich ein Beilageblech 30. Es werden drei Teile des ersten Bauteils 10 miteinander verbunden. Dabei kann nur die vordere Seitenwand des ersten Bauteils 10 eine Passung aufweisen.

Figuren 27 bis 32 zeigen einen Typ 600 der erfindungsgemäßen Verbindung. Typ 600 ähnelt dem Typ 300, hat aber eine weitere Schnittebene. Die Passverbindung 40 ist ein Passstift. Innen ist kein Beilageblech 30 vorgesehen. Die Schraubverbindung 50 ist wiederum ein Schließringbolzen. Bei der ersten inneren Trennfuge ist ein Passstift und ein Schließringbolze vorgesehen, bei der zweiten inneren Trennfuge nur ein Passstift.

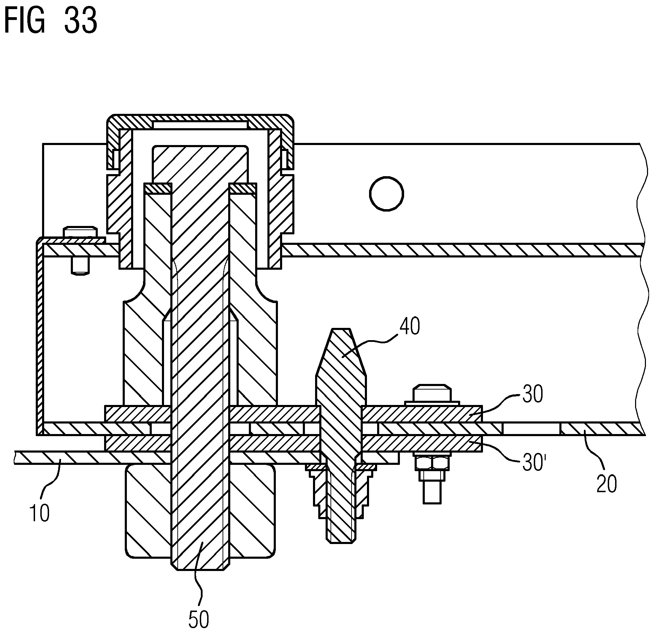

Figur 33 zeigt abschließend eine Verbindung zwischen einem Wagenkasten bzw. einer Wagenkastenhalterung 10 und einer Traverse 20. Der Wagenkasten ist bevorzugt aus Edelstahl gefertigt. Die Traverse umfasst Aluminium oder eine Aluminiumlegierung. Die Schraubverbindung 50 besteht aus einer Schraube. Ein Scherbolzen ist als Passverbindung 40 in den Wagenkasten bzw. die Wagenkastenhalterung eingepresst. Dazu weist der Scherbolzen eine Verjüngung von der Traverse 20 zum Wagenkasten bzw. zur Wagenkastenhalterung 10 hin auf. Es sind zwei Beilageplatten 30 vorgesehen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verbindung von Bauteilen umfassend:
- ein erstes Bauteil (10) aus einem ersten Material,
- ein zweites Bauteil (20), aus einem zweiten Material, wobei das zweite Material einen anderen Wärmeausdehnungskoeffizienten als das erste Material aufweist,
- eine Passverbindung (40),
- eine Schraubverbindung (50),
**dadurch gekennzeichnet, dass**
- eine Beilageplatte (30) vorhanden ist,
- das zweite Bauteil zwischen dem ersten Bauteil (10) und der Beilageplatte (30) angeordnet ist,
- die Passverbindung (40) angeordnet ist, eine erste Befestigung vom ersten Bauteil (10), zweiten Bauteil (20) und Beilageplatte (30) aneinander zu gewährleisten,
- die Schraubverbindung (50) angeordnet ist, eine zweite Befestigung vom ersten Bauteil (10), zweiten Bauteil (20) und Beilageplatte (30) aneinander zu gewährleisten, wobei
- die Passverbindung (40) relativ zu dem ersten Bauteil (10) und zur Beilageplatte (30) passgenau eingepasst ist und relativ zum zweiten Bauteil (20) mit Spiel eingepasst ist, und
- die Schraubverbindung (50) relativ zu dem ersten Bauteil (10), zum zweiten Bauteil (20) und zur Beilageplatte (30) mit Spiel eingepasst ist.

2. Verbindung nach Anspruch 1,
wobei das erste Material des ersten Bauteils (10) Stahl umfasst, bevorzugt Edelstahl.

3. Verbindung nach Anspruch 1 oder 2,
wobei das zweite Material des zweiten Bauteils (20) Aluminium umfasst.

4. Verbindung nach einem der vorhergehenden Ansprüche,
wobei die Beilageplatte (30) über die Passverbindung (40) biegesteif angebunden ist.

5. Verbindung nach einem der vorhergehenden Ansprüche,
wobei die Anbindungen sowohl vom ersten Bauteil (10) und zweiten Bauteil (20) als auch vom ersten Bauteil (10) und Beilageplatte (30) jeweils formschlüssig sind.

6. Verbindung nach einem der vorhergehenden Ansprüche,
wobei die Passverbindung (40) eine Vorspannkraft von 50 % oder weniger ihrer Streckgrenze aufweist.

7. Verbindung nach einem der vorhergehenden Ansprüche,
wobei die Schraubverbindung (50) einen kleineren Durchmesser als die Passverbindung (40) aufweist.

8. Verbindung nach einem der vorhergehenden Ansprüche,
wobei die Schraubverbindung (50) zwischen 50 % und 80 % ihrer Streckgrenze vorgespannt ist, bevorzugt zwischen 65 % und 75 %.

9. Verbindung nach einem der vorhergehenden Ansprüche,
wobei die Schraubverbindung (50) und das erste Bauteil (10), die Schraubverbindung (50) und das zweite Bauteil (20), und die Schraubverbindung (50) und die Beilageplatte (30) dasselbe Spiel zueinander aufweisen.

10. Verbindung nach einem der vorhergehenden Ansprüche,
wobei die Beilageplatte (30) aus einem dritten, von dem ersten und dem zweiten Material unterschiedlichem Material besteht.

11. Verbindung nach einem der vorhergehenden Ansprüche,
wobei eine zweite Beilageplatte (30') zwischen einem Ende der Passverbindung (40) und dem ersten Bauteil (20) angeordnet ist.

12. Schienenfahrzeug umfassend eine Verbindung nach einem der vorhergehenden Ansprüche, wobei das erste Bauteil (10) ein Wagenkasten oder ein Container ist und das zweite Bauteil (20) eine Traverse ist.

## Claims

1. Connection of components comprising:
- a first component (10) made from a first material,
- a second component (20) made from a second material, wherein the second material has a different thermal expansion coefficient to the first material,
- a fitting connection (40),
- a screw connection (50),
**characterised in that**
- a shim (30) is present,
- the second component is arranged between the first component (10) and the shim (30),
- the fitting connection (40) is arranged so as to ensure a first fastening of the first component (10), second component (20) and shim (30) to one another,
- the screw connection (50) is arranged so as to ensure a second fastening of the first component (10), second component (20) and shim (30) to one another, wherein
- the fitting connection (40) is perfectly fitted relative to the first component (10) and to the shim (30) and fitted with play relative to the second component (20), and
- the screw connection (50) is fitted with play relative to the first component (10), the second component (20) and the shim (30).

2. Connection according to claim 1,
wherein the first material of the first component (10) comprises steel, preferably stainless steel.

3. Connection according to claim 1 or 2,
wherein the second material of the second component (20) comprises aluminium.

4. Connection according to one of the preceding claims,
wherein the shim (30) is tied in a bend-resistant manner by way of the fitting connection (40).

5. Connection according to one of the preceding claims,
wherein the links are in each case form-fit both from the first component (10) and second component (20) and also from the first component (10) and shim (30).

6. Connection according to one of the preceding claims,
wherein the fitting connection (40) has a pretensioning force of 50% or less of its elastic limit.

7. Connection according to one of the preceding claims,
wherein the screw connection (50) has a smaller diameter than the fitting connection (40).

8. Connection according to one of the preceding claims,
wherein the screw connection (50) is pretensioned between 50% and 80% of its elastic limit, preferably between 65% and 75%.

9. Connection according to one of the preceding claims,
wherein the screw connection (50) and the first component (10), the screw connection (50) and the second component (20), and the screw connection (50) and the shim (30) have the same play relative to one another.

10. Connection according to one of the preceding claims,
wherein the shim (30) consists of a third material which differs from the first and the second material.

11. Connection according to one of the preceding claims,
wherein a second shim (30') is arranged between one end of the fitting connection (40) and the first component (20).

12. Rail vehicle comprising a connection according to one of the preceding claims, wherein the first component (10) is a vehicle body or a container and the second component (20) is a traverse.

## Revendications

1. Liaison de pièces comprenant :
- une première pièce (10) en un premier matériau,
- une deuxième pièce (20) en un deuxième matériau,
le deuxième matériau ayant un coefficient de dilatation thermique autre que le premier matériau,
- une liaison (40) d'ajustement,
- une liaison (50) de vissage,
**caractérisée en ce que**
- il y a une plaque (30) de calage,
- la deuxième pièce est disposée entre la première pièce (10) et la plaque (30) de calage,
- la liaison (40) d'ajustement est disposée de manière à assurer une fixation les unes sur les autres de la première pièce (10), de la deuxième pièce (20) et de la plaque (30) de calage,
- la liaison (50) de vissage est disposée de manière à assurer les unes sur les autres une deuxième fixation de la première pièce (10), de la deuxième pièce (20) et de la plaque (30) de calage,
- la liaison (40) d'ajustement étant adaptée avec ajustement précis par rapport à la première pièce (10) et par rapport à la plaque (30) de calage, et étant adaptée avec jeu par rapport à la deuxième pièce (20), et
- la liaison (50) de vissage est adaptée avec jeu par rapport à la première pièce (10), à la deuxième pièce (20) et à la plaque (30) de calage.

2. Liaison suivant la revendication 1,
dans laquelle le premier matériau de la première pièce (10) comprend de l'acier, de préférence de l'acier fin.

3. Liaison suivant la revendication 1 ou 2,
dans laquelle le deuxième matériau de la deuxième pièce (20) comprend de l'aluminium.

4. Liaison suivant l'une des revendications précédentes,
dans laquelle la plaque (30) de calage est reliée d'une manière rigide en flexion par l'intermédiaire de la liaison (40) d'ajustement.

5. Liaison suivant l'une des revendications précédentes,
dans laquelle les liaisons, tant de la première pièce (10) et de la deuxième pièce (20), qu'également de la première pièce (10) et de la plaque (30) de calage sont chacune à complémentarité de forme.

6. Liaison suivant l'une des revendications précédentes,
dans laquelle la liaison (40) d'ajustement a une force de précontrainte inférieure ou égale à 50% de sa limite élastique.

7. Liaison suivant l'une des revendications précédentes,
dans laquelle la liaison (50) de vissage a un diamètre plus petit que la liaison (40) d'ajustement.

8. Liaison suivant l'une des revendications précédentes,
dans laquelle la liaison (50) de vissage est précontrainte entre 50% et 80% de sa limite élastique, de préférence entre 65% et 75%.

9. Liaison suivant l'une des revendications précédentes,
dans laquelle la liaison (50) de vissage et la première pièce (10), la liaison (50) de vissage et la deuxième pièce (20) et la liaison (50) de vissage et la plaque (30) de calage ont les mêmes jeux entre elles.

10. Liaison suivant l'une des revendications précédentes,
dans laquelle la plaque (30) de calage est en un troisième matériau différent du premier matériau et du deuxième matériau.

11. Liaison suivant l'une des revendications précédentes,
dans laquelle une deuxième plaque (30') de calage est disposée entre une extrémité de la liaison (40) d'ajustement et la première pièce (20).

12. Véhicule ferroviaire comprenant une liaison suivant l'une des revendications précédentes, la première pièce (10) étant une caisse ou un conteneur et la deuxième pièce (20) une traverse.
